# FASCICULE DE BREVET EUROPEEN

(11) **EP 2 134 607 B1**
(45) Date de publication et mention de la délivrance du brevet: **13.04.2011**
(21) Numéro de dépôt: 08863664.2
(22) Date de dépôt: 04.12.2008
(51) Int. Cl.: B65B 25/06, B65B 31/00, B65D 81/20

(54) **CONTENEUR RIGIDE DE DENREES ALIMENTAIRES COMPRENANT DU POISSON**
FESTSTOFFBEHÄLTER FÜR FISCHHALTIGE LEBENSMITTEL
RIGID CONTAINER FOR FOOD INCLUDING FISH

(30) Priorité: 05.12.2007 FR 0759588
(43) Date de publication de la demande: 23.12.2009
(73) Titulaire: Etablissements Paul Paulet, 29100 Douarnenez (FR)
(72) Inventeur: RONSIN, Benoît, 29180 Plogonnec (FR); NAULEAU, Christine, 29000 Quimper (FR); MUCKENSTURM, Eric, 29000 Quimper (FR); OLIVIERI, Alain, 83740 La Cadière-d'Azur (FR)
(74) Mandataire: Thiollier, Clémence-Olivia Laure Marie
(86) Numéro de dépôt international: PCT/FR2008/052207
(87) Numéro de publication internationale: WO 2009/080942

(56) Documents cités:
- WO-A-97/14614
- WO-A-2005/002990
- GB-A- 681 052
- GB-A- 2 089 191
- US-A- 2 602 030
- US-A1- 2005 037 114

## Description

La présente invention concerne le domaine de la conservation de denrées alimentaires, en particulier de denrées alimentaires comprenant du poisson.

On connaît déjà des conteneurs rigides de denrées alimentaires, permettant de conserver du poisson destiné à la vente, par exemple des boîtes de conserve métalliques remplies de thon.

Parmi les denrées alimentaires conservées dans ce type de conteneur, certaines se présentent sous forme solide, par exemple le thon en miettes ou le thon entier, et les denrées sont conservées à l'intérieur de la boîte de conserve avec du liquide, ce liquide pouvant être ce que l'on appelle "liquide de couverture", par exemple de la saumure ou de l'huile végétale, comprenant majoritairement de l'eau salée. Ce liquide de couverture est nécessaire dans la boîte de conserve pour deux principales raisons, à savoir la cuisson et/ou la stérilisation du thon (du fait que le liquide conduit la chaleur au cours du chauffage de la boîte de conserve), et la protection du thon contre l'oxydation. En effet, on sait que le thon, et le poisson en général, est un produit particulièrement sensible à l'oxydation, du fait que ce produit comporte davantage de lipides qu'un certain nombre de denrées alimentaires telles que des légumes.

Ce liquide de couverture utilisé pour la conservation n'est pas destiné à être consommé par les utilisateurs. Ainsi, pour consommer du thon contenu dans la boîte de conserve, le consommateur ouvre la boîte de conserve, vide dans un évier le jus constitué par le liquide de couverture, et vide ensuite le thon dans un plat ou une assiette.

Les documents GB 2 089 191, GB 6 810 52 et US 8 163 43 montrent divers conteneurs contenant du poisson ainsi que leur procédé de réalisation.

La présente invention vise à rendre plus pratique pour le consommateur l'utilisation de ce type de boîte de conserve.

A cet effet, l'invention a pour objet un conteneur rigide selon la revendication 1.

On comprend que le conteneur rigide est destiné à la longue conservation de denrées alimentaires, la durée de conservation étant supérieure à un mois, de préférence à trois années (36 mois). Ce conteneur rigide, en métal ou en plastique, peut aussi être désigné « boîte de conserve ». On comprend également que toutes ses parois, y compris le couvercle, sont rigides et étanches à l'oxygène.

On entend par "les denrées alimentaires se présentent sous forme solide" le fait que ces denrées alimentaires ne sont pas liquides. Par exemple, les denrées alimentaires sont sous forme de tranches, de morceaux, de filets, de miettes, sous forme hachée ou encore sous forme entière (par exemple des sardines entières).

On notera que, dans le cadre de la présente demande, on inclut dans le groupe des "denrées alimentaires comprenant du poisson" des denrées alimentaires comprenant de la chair de crustacés, tels que du crabe ou des crevettes.

On entend par "le conteneur ne présente sensiblement pas de liquide" le fait que le conteneur comporte une portion négligeable de liquide libre si bien qu'il n'est pas nécessaire que le consommateur, lorsqu'il ouvre la boîte de conserve, procède à une étape de vidage d'un liquide tel qu'un liquide de couverture. On comprendra que le conteneur peut néanmoins présenter quelques gouttes de liquide, par exemple destinées à aromatiser les denrées, mais ces quelques gouttes n'ont rien à voir en quantité avec le liquide de couverture que l'on trouve traditionnellement pour conserver les denrées sous forme solide et que l'on doit vider avant la consommation (ce liquide représentant généralement environ 30% en masse du contenu du conteneur). De préférence, cette portion négligeable de liquide ne dépasse pas une teneur en liquide égale à 5 % de la masse totale du contenu du conteneur, et auront même de préférence une teneur en liquide inférieure à 1 % de cette masse. Néanmoins, on peut considérer que, pour une teneur en liquide inférieure à 10% de la masse totale du contenu, le conteneur ne présente sensiblement pas de liquide.

Ainsi, on propose de conserver des denrées comprenant du poisson sans utiliser de liquide de couverture.

En fait, les inventeurs à l'origine de la présente invention ont constaté que le liquide de couverture est inutile pour le consommateur. Ils ont réalisé des tests révélant que ce liquide peut même être indésirable pour le consommateur, du fait qu'il est nécessaire de le vider après l'ouverture de la boîte de conserve, ce liquide n'étant pas consommé avec les denrées alimentaires. En effet, on constate que cette étape de drainage des denrées alimentaires peut engendrer une perte de temps pour le consommateur, et nécessiter en outre la mise en oeuvre de l'évacuation du liquide, peu pratique si le consommateur n'est pas proche d'un évier, et constituant un jus susceptible de couler dans les bacs de déchets. Grâce au conteneur proposé ci-dessus, le consommateur peut disposer par exemple d'une boîte de conserve remplie de thon en miettes, sans liquide de couverture, si bien qu'il a uniquement besoin, pour le consommer, d'ouvrir la boîte et de verser le thon dans son plat.

Ainsi, alors que le poisson solide était historiquement conservé avec du liquide, ce liquide étant considéré comme nécessaire à la conservation (des normes ayant d'ailleurs légiféré la présence de liquide de couverture, par exemple le règlement 1536/92 CE pour le thon, ou encore le règlement 2136/89 CE pour la sardine, qui prévoient des rapports minimaux entre le poids de poisson à l'ouverture et le poids net du contenu, ce rapport minimum étant par exemple de 70% dans le cas où le liquide de couverture est de l'eau, soit un poids maximal d'eau de 30%), les inventeurs vont contre les idées reçues en supprimant le liquide de conservation.

En outre, les inventeurs ont constaté qu'il n'était pas nécessaire d'avoir du liquide de couverture pour permettre la stérilisation des denrées alimentaires une fois le conteneur fermé. En effet, l'eau liquide nécessaire au transfert de chaleur, par exemple lors d'une stérilisation à 121 °C, peut être fournie directement par le poisson avant sa cuisson. En effet, le thon cru comporte par exemple 70 % d'eau, si bien que cette eau liquide peut assurer le transfert de chaleur au cours du chauffage, et l'eau du liquide de couverture n'est donc pas indispensable. On notera que le poisson, même pré-cuit, peut fournir une quantité de liquide suffisante pour assurer le transfert de chaleur au cours de la stérilisation.

Selon l'invention, le conteneur est réalisé dans un matériau choisi parmi l'aluminium, l'acier, le verre, une matière plastique étanche à l'oxygène. Le conteneur peut donc être une boîte de conserve, aussi bien métallique qu'en matière plastique, ce conteneur étant toutefois rigide, ce qui rend plus difficile une mise sous vide d'air mécanique du conteneur.

L'invention peut en outre comporter l'une ou plusieurs des caractéristiques suivantes.
- Les denrées alimentaires contenues sont choisies parmi l'ensemble constitué par du thon, du saumon, du crabe, de la sardine, de la crevette, du maquereau, du poisson blanc, chacun pouvant être nature ou aromatisé.
- Le conteneur, fermé, contient uniquement les denrées alimentaires et de l'azote sous forme gazeuse. Ainsi, on remplace le liquide de couverture traditionnellement utilisé pour éviter l'oxydation du poisson par de l'azote sous forme gazeuse (N_{2(g)}), si bien que l'azote sous forme gazeuse constitue une alternative au liquide de couverture pour empêcher l'oxydation.
- Le conteneur, fermé, contient uniquement les denrées alimentaires et de l'eau (H₂O_{(g)}) sous forme gazeuse. De même que pour l'azote, la vapeur d'eau remplace le liquide de couverture pour empêcher l'oxydation du poisson.
- Le conteneur présente des parois latérales lisses. Ainsi, le conteneur présenté ci-dessus ne comporte pas de liquide, mais ne nécessite pas pour autant que ses parois présentent des moyens de rigidification, tels que des ondulations, de tels moyens de rigidification pouvant s'avérer nécessaire dans le cas où l'on souhaite faire le vide d'air de façon mécanique dans un conteneur. Ainsi, les inventeurs à l'origine de l'invention parviennent à proposer un conteneur vide d'air, qui empêche donc l'oxydation du poisson, sans pour autant nécessiter la mise en oeuvre du vide mécanique du conteneur.
- Le conteneur a une forme cylindrique, dont le diamètre est de préférence compris entre 60 et 110 mm (millimètres).- Le conteneur comprend une teneur en liquide inférieure ou égale à 5% de la masse totale du contenu du conteneur, de préférence une teneur en liquide inférieure à 1 % de cette masse.
- Le conteneur comprend une teneur en liquide supérieure strictement à 5% et inférieure ou égale à 10%.

L'invention a également pour objet un procédé de réalisation du conteneur présenté ci-dessus, comportant une étape de remplissage des denrées alimentaires dans le conteneur et une étape d'élimination de l'air présent dans le conteneur. C'est en éliminant l'air du conteneur que l'on empêche l'oxydation des denrées alimentaires une fois le conteneur fermé, comme cela a été décrit ci-dessus, ce qui rend le liquide de couverture non indispensable. En outre, comme expliqué précédemment, il n'est pas nécessaire d'avoir de liquide de couverture pour permettre la stérilisation des denrées alimentaires une fois le conteneur fermé, contrairement aux idées reçues.

Le procédé peut en outre comporter l'une ou plusieurs des caractéristiques suivantes.
- L'étape d'élimination de l'air comprend une étape d'introduction d'azote sous forme liquide dans le conteneur.
- L'étape d'élimination de l'air comprend une étape d'introduction d'eau sous forme gazeuse dans le conteneur.

L'invention a également pour objet un dispositif de réalisation du conteneur tel que présenté ci-dessus, ce dispositif comprenant des moyens d'introduction d'azote liquide dans le conteneur.

L'invention a enfin pour objet un dispositif de réalisation du conteneur présenté ci-dessus, ce dispositif comprenant des moyens d'introduction d'eau sous forme gazeuse dans le conteneur. De préférence, ces moyens comprennent un tunnel vapeur et permettent d'injecter la vapeur sur les côtés du tunnel.

L'invention sera mieux comprise à la lecture de la description qui va suivre, donnée uniquement à titre d'exemple et faite en se référant aux dessins dans lesquels :
- la figure 1 est un schéma en coupe d'un conteneur selon un mode de réalisation de l'invention ;
- la figure 2 est un schéma illustrant un procédé de réalisation du conteneur de la figure 1 ;
- la figure 3 est une vue de dessus schématique d'une installation comprenant un dispositif de réalisation du conteneur de la figure 1 ; et
- la figure 4 est une vue de dessus d'un conteneur similaire à celui de la figure 1, une fois ouvert par un consommateur.

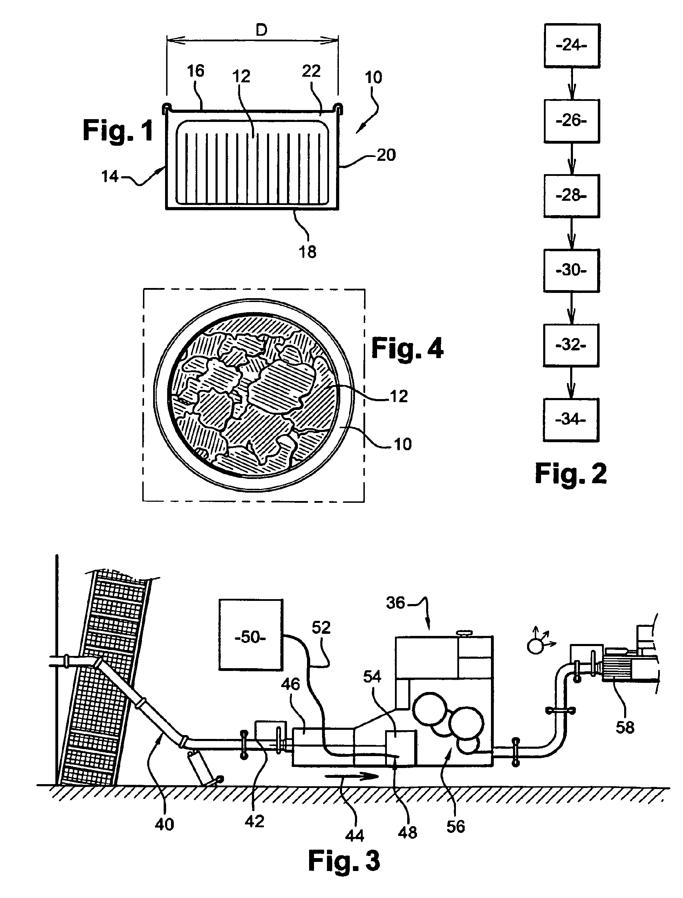

Comme on peut le voir sur la figure 1, un conteneur 10 selon un mode de réalisation de l'invention est rempli de denrées alimentaires 12, ces denrées se présentant sous forme solide, c'est-à-dire qu'elles ne s'écoulent pas. Par exemple, elles sont sous forme d'un bloc solide, de filets, de tranches, de morceaux, de miettes, sous forme hachée ou encore sous forme d'un poisson entier.

Les denrées 12 comprennent du poisson (ce terme incluant aussi de la chair de crustacé), donc des lipides susceptibles de s'oxyder. Le poisson peut être tout type de poisson susceptible d'être conservé dans un conteneur, en particulier du thon, du saumon, de la sardine, du crabe, des crevettes, etc. Dans l'exemple de la figure 1, on a représenté schématiquement un morceau de thon sous forme entière, par exemple du thon de type Listao ou Albacore ou tout autre type de thon, et sur la figure 4, du thon en miettes. Eventuellement, les denrées alimentaires 12 ne sont pas constituées uniquement de poisson, mais comprennent d'autres aliments, notamment un additif, un conservateur, ou encore un peu d'huile destinée à l'aromatisation.

Comme on peut le voir sur la figure 1, le conteneur 10, une fois fermé, ne présente sensiblement pas de liquide. On comprendra que les denrées alimentaires 12 peuvent avoir été initialement remplies dans le conteneur 10 avec du liquide, par exemple de l'huile ou un peu d'eau, mais une fois que le conteneur 10 est fermé en vue de sa mise en vente auprès des consommateurs, ce conteneur ne présente plus de liquide à l'intérieur, le liquide ayant pu être absorbé, au cours d'un chauffage par exemple. Par exemple, l'addition d'huile ou d'eau avant fermeture du conteneur est comprise entre 2 et 10% du poids du poisson, de préférence entre 2,4 et 6,5% du poids du poisson. Le liquide ajouté peut être notamment de l'eau, de l'huile de tournesol, de l'huile d'olive, ou tout autre type d'huile. Par ailleurs, on comprendra que le conteneur 10, fermé, peut présenter des traces de liquide, par exemple sous forme de gouttes, mais cette quantité de liquide n'est pas élevée au point de nécessiter que le liquide soit vidé avant la consommation des denrées alimentaires. Ainsi, lorsque le conteneur 10 est ouvert par le consommateur et vidé dans un plat, on obtient par exemple un aspect similaire à celui de la figure 4, sans avoir nécessité l'étape préalable de vidage d'un liquide. Il est donc possible que des gouttes de liquide soient présentes dans le conteneur, mais la quantité de liquide du conteneur ne dépasse pas 10%, voire 5%, de la masse totale du contenu du conteneur 10, et sera même de préférence inférieure à 1 % de cette masse. On peut noter que cette teneur en liquide est bien inférieure à celle que l'on trouve traditionnellement dans les boîtes de denrées alimentaires comprenant du liquide de couverture, la teneur en liquide étant dans ce cas, en pratique, voisine de 25 % de la masse totale du contenu du conteneur.

Comme on le voit sur la figure 1, le conteneur 10 comprend un réceptacle 14 et un couvercle 16. Dans cet exemple, le conteneur 10 est réalisé en acier, le couvercle 16 étant serti sur le réceptacle 14, mais il pourrait également être réalisé de la même façon en aluminium. Selon une variante, le conteneur 10 est réalisé en matière plastique, le couvercle 16 étant scellé sur le réceptacle 14, la matière plastique comprenant un matériau appelé "matériau barrière", étanche à l'oxygène, par exemple un matériau multicouche tel que le polypropylène/EVOH/polypropylène (EVOH : éthylène-alcool vinylique), ou bien un matériau monocouche tel que le polyéthylène. Selon une autre variante, le conteneur 10 est un bocal en verre. On comprend que toutes les parois du conteneur, y compris le couvercle 16, sont rigides et étanches à l'oxygène.

Dans l'exemple de la figure 1, le conteneur 10 est de forme cylindrique, le réceptacle 14 comprenant un fond 18, en forme de disque, et des parois latérales 20. Ces parois latérales 20, grâce au procédé de réalisation du conteneur 10, n'ont pas besoin d'être renforcées par des ondulations, du fait qu'il n'est pas nécessaire de procéder à un vide d'air mécanique du conteneur. Le fond 18 a de préférence un diamètre compris entre 60 et 110 mm. Par ailleurs, le conteneur 10 peut avoir une capacité plus ou moins grande, il peut en particulier contenir des denrées 12 dont le poids varie de 80 g à 2 kg.

Le conteneur 10 visible sur la figure 1 est appertisé, c'est-à-dire traité en vue de la conservation des denrées périssables en les stérilisant par la chaleur. Une fois réalisé, c'est-à-dire prêt à la vente, ce conteneur 10 contient uniquement les denrées alimentaires 12 et du gaz 22, ainsi qu'éventuellement quelques traces de liquide, comme expliqué précédemment. Le gaz 22 est un gaz non susceptible d'oxyder les denrées alimentaires 12. Selon un mode de réalisation, ce gaz 22 est de l'azote N_{2(g)}. Selon un autre mode de réalisation, le gaz 22 est de la vapeur d'eau H₂O_{(g)}. La quantité de gaz 22 par rapport à la quantité de denrées alimentaires 12 peut varier d'un conteneur à l'autre, notamment en fonction de la forme des denrées 12.

On peut noter que quelques traces de dioxygène O₂ peuvent être présentes dans le gaz 22, mais il s'agit de traces, la teneur volumique du dioxygène par rapport à la quantité de l'autre gaz étant inférieure à 15%, de préférence inférieure à 5 %.

On peut noter que le gaz 22 ne comprend pas d'atome d'oxygène facilement libérable, à la différence de l'air par exemple, si bien que ce gaz 22 n'est pas susceptible d'oxyder les denrées 12, oxydation qui pourrait générer un mauvais goût ou un changement de couleur des denrées 12. Par ailleurs, malgré l'absence de liquide de couverture dans le conteneur 10, ce conteneur 10 a pu être stérilisé par chauffage, le transfert de chaleur ayant été assuré par l'eau contenue dans les denrées alimentaires avant leur chauffage.

Le procédé de réalisation du conteneur 10 va à présent être décrit, en se référant à la figure 2.

Le procédé de réalisation commence par une étape 24 de cuisson ou de pré-cuisson des denrées 12, par exemple du thon ou du saumon entier. Cette étape 24 est suivie par une étape 26 de filetage du poisson, cette étape comprenant par exemple un dépeçage, un désarêtage et une découpe du poisson. L'étape 26 est suivie d'une étape 28 de remplissage du conteneur 10, plus précisément une étape de remplissage dosé du réceptacle 14 par les denrées alimentaires 12. Cette étape de remplissage est également appelée étape d'emboîtage.

L'étape 28 d'emboîtage est suivie de l'élimination 30 de l'air présent, avec les denrées 12, à l'intérieur du réceptacle 14. Cette étape 30 d'élimination de l'air comporte une étape d'introduction d'azote liquide dans le réceptacle, et une étape d'expansion de l'azote liquide, lequel se vaporise en chassant l'air présent dans le réceptacle 14. Plus précisément, on introduit de l'azote N₂₍ₗ₎ sous forme liquide, par exemple une goutte d'azote, l'azote étant préalablement stocké à une température de -176°C sous une pression de 1 bar. Lorsque l'azote est introduit dans le réceptacle 14, à température ambiante, il se vaporise quasiment instantanément. L'azote gazeux entraîne l'air initialement présent dans le réceptacle 14 et le chasse de façon qu'il ne reste plus que de l'azote sous forme gazeuse à l'issue de l'étape 30.

L'étape 30 est rapidement suivie d'une étape 32 de fermeture de la boîte, par sertissage par exemple, au cours de laquelle le couvercle 16 est fixé de façon définitive et hermétique sur le réceptacle 14. Une fois fermé de façon hermétique et définitive, les denrées 12 enfermées dans le conteneur 10 peuvent être stérilisées, lors d'une étape 34 de chauffage du conteneur, le chauffage ayant lieu à 121°C minimum, afin d'obtenir une stérilisation satisfaisante. La stérilisation peut néanmoins avoir lieu à une température inférieure, par exemple 116°-117°C.

Selon un autre mode de réalisation du procédé, l'étape 30 est remplacée par une étape d'introduction de vapeur d'eau, au cours de laquelle de l'eau sous forme gazeuse est injectée par débordement dans le réceptacle 14, ce qui chasse l'air présent dans le réceptacle, cette injection étant ensuite rapidement suivie de l'étape 32 de fermeture du conteneur. On notera qu'il faut prévoir un temps de contact vapeur / denrées suffisant, par exemple compris entre 20 et 30 secondes par conteneur (soit 240 boîtes par minute sur une longueur de 6 mètres d'un tunnel d'injection de vapeur).

A l'issue de l'étape 34, on dispose d'un conteneur 10 disponible à la vente auprès des consommateurs.

On notera que le procédé de réalisation ne comporte pas d'étape de jutage au cours de laquelle on introduit du liquide de couverture dans la boîte. En effet, le procédé de réalisation d'un conteneur comprenant du liquide de couverture remplacerait l'étape 30 par une étape d'introduction de liquide de couverture, le liquide de couverture ayant pour fonction d'éviter l'oxydation des denrées 12, et de permettre le transfert thermique lors de l'étape de chauffage 34.

Selon des exemples de mises en oeuvre du procédé avec introduction de vapeur d'eau, le conteneur peut présenter les caractéristiques suivantes.

| | Denrées 12 avec un peu d'eau au cours du remplissage | Denrées 12 avec un peu d'huile au cours du remplissage |
|---|---|---|
| Quantité de poisson remplie avant fermeture du conteneur | 127g | 122g |
| Addition d'eau/ d'huile de tournesol avant fermeture du conteneur | 3g | 8g |
| Poids net | 130g | 130g |
| Dépression dans le conteneur une fois fermé | 10 Inch/mg | |
| Stérilisation | 47 minutes à 117°C | |
| Quantité de liquide après stérilisation | 6g | 10g |

Par ailleurs, selon un exemple de mise en oeuvre du procédé avec injection d'azote, on injecte environ 1g d'azote par conteneur, en considérant un temps d'injection de 115ms et une pression d'injection de 1,2bar. La quantité d'oxygène résiduel pour des denrées 12 comprenant du thon est comprise de préférence entre 5 et 7,5%. La quantité d'oxygène résiduel pour des denrées 12 comprenant du saumon est comprise de préférence entre 10 et 13%. La stérilisation est mise en oeuvre par cycle de 36 minutes, à une température d'environ 117 -119°C.

Le dispositif de réalisation du conteneur 10 va à présent être décrit, en se référant à la figure 3.

L'installation dans laquelle le dispositif de réalisation 36 est monté comprend une chaîne 40 de réalisation des conteneurs. Cette chaîne comprend un tapis roulant, faisant circuler des réceptacles similaires au réceptacle 14. A l'entrée 42 du dispositif de réalisation, les réceptacles 14 sont vides et circulent selon le sens indiqué par la flèche 44. Les réceptacles 14 passent tout d'abord dans un outil de remplissage 46, afin de mettre en oeuvre l'étape 28 de remplissage du réceptacle par les denrées 12, et passe ensuite dans un outil 48 d'élimination de l'air présent dans le réceptacle 14. Cet outil d'élimination comporte des moyens d'introduction d'azote liquide dans le conteneur. Ces moyens d'introduction comprennent des moyens 50 de stockage d'azote sous forme liquide, un conduit flexible 52 permettant d'acheminer l'azote, et des moyens 54 de distribution dosée de l'azote liquide dans chaque réceptacle. Les moyens 54 permettent d'injecter une petite quantité d'azote, par exemple une goutte, qui se vaporise ensuite de façon à chasser l'air présent dans le réceptacle, afin d'exécuter l'étape 30 du procédé. Les réceptacles sont ensuite fermés, en rapportant le couvercle 16, grâce à des moyens de sertissage ou de scellage 56, permettant de fermer le conteneur 10 de façon hermétique. Une fois fermés, les conteneurs 10 sont acheminés vers des moyens 58 de stockage en vue de leur vente auprès des consommateurs.

On comprendra que dans le cas où l'on injecte de la vapeur d'eau dans les réceptacles 14, les moyens d'élimination de l'air sont différents. En l'occurrence, les moyens 50, 52 et 54 sont remplacés par des moyens d'injection de vapeur d'eau dans les réceptacles. Ces moyens 50, 52, 54 sont formés dans un tunnel vapeur, par exemple de 6m de long. De préférence, on injecte la vapeur d'eau sur les côtés de ce tunnel, de part et d'autre des conteneurs, ce qui permet de créer une atmosphère de vapeur tout en évitant que des gouttes d'eau se déposent dans les conteneurs.

On notera enfin que l'invention n'est pas limitée aux modes de réalisation précédemment décrits.

Parmi les avantages de l'invention, on notera que l'on fournit des conteneurs 10 sans liquide de couverture.

Au passage, on constate que l'utilisation d'une boîte de conserve sans liquide de couverture est facile d'utilisation et permet de réduire le poids et/ou la taille de la boîte de conserve, d'où une économie dans les frais de transport.

## Revendications

1. Conteneur rigide (10) pour la conserve de denrées alimentaires (12), le conteneur comprenant un réceptacle (14) et un couvercle (16) et étant réalisé dans un matériau choisi parmi l'aluminium, l'acier, le verre, ou une matière plastique étanche à l'oxygène,
les denrées alimentaires (12) étant constituées de poisson précuit sous forme solide, comprenant éventuellement un additif, un conservateur, un peu d'huile ou un peu d'eau, **caractérisé en ce que**
- le conteneur fermé (10), après stérilisation, ne présente sensiblement pas de liquide, c'est-à-dire qu'il comprend une teneur en liquide inférieure ou égale à 10% de la masse totale du contenu du conteneur, et
- le conteneur contient uniquement les denrées alimentaires (12) et un gaz (22), la teneur volumique du dioxygène par rapport à la quantité de l'autre gaz étant inférieure à 15%, le gaz étant de l'azote (N_{2(g)}).

2. Conteneur selon la revendication précédente, dans lequel les denrées alimentaires (12) contenues sont choisies parmi l'ensemble constitué par du thon, du saumon, du crabe, de la sardine, de la crevette, du maquereau, du poisson blanc, chacun pouvant être nature ou aromatisé.

3. Conteneur selon l'une quelconque des revendications précédentes, présentant des parois latérales lisses(20).

4. Conteneur selon l'une quelconque des revendications précédentes, comprenant une teneur en liquide inférieure ou égale à 5% de la masse totale du contenu du conteneur, de préférence une teneur en liquide inférieure à 1 % de cette masse.

5. Conteneur selon l'une quelconque des revendications 1 à 3, comprenant une teneur en liquide supérieure strictement à 5% et inférieure ou égale à 10%.

6. Conteneur selon l'une quelconque des revendications précédentes, dans lequel la teneur volumique du dioxygène par rapport à la quantité de l'autre gaz (22) est inférieure à 5%.

7. Conteneur selon l'une quelconque des revendications précédentes, dans lequel les denrées alimentaires (12) sont sous forme de tranches, de morceaux de filets, de miettes, sous forme hachée ou encore sous forme entière.

8. Procédé de réalisation d'un conteneur (10) selon l'une quelconque des revendications précédentes, comportant une étape (28) de remplissage des denrées alimentaires (12) dans le conteneur et une étape (30) d'élimination de l'air présent dans le conteneur.

9. Procédé selon la revendication précédente, dans lequel l'étape (30) d'élimination de l'air comprend une étape d'introduction d'azote sous forme liquide dans le conteneur.

10. Dispositif de réalisation d'un conteneur selon l'une quelconque des revendications 1 à 7, comprenant des moyens (48) d'introduction d'azote liquide dans le conteneur.

## Claims

1. A rigid container (10) containing foodstuff (12), the container comprising a receptacle (14) and a cover (16) and being made of a material selected from aluminum, steel, glass, or a plastics material that is oxygen-proof, the foodstuff (12) being constituted by pre-cooked fish that is in solid form, eventually comprising an additive, a preservative, or indeed a small amount of water or oil, **characterized in that**
- the closed container (10) presents substantially no liquid after sterilization, such that the liquid content is less than 10% of the total weight of the content, and
- the container contains only the foodstuff (12) and a gas (22), wherein the volume content of dioxygen in the gas (22) is less than 15%, the gas being nitrogen (N_{2(g)}).

2. A container according to the preceding claim, wherein the foodstuff (12) contained therein is selected from the group constituted by: tuna, salmon, crab, sardine, shrimp, mackerel, white fish, each of which may be plain or flavored.

3. A container according to any preceding claim, presenting smooth side walls (20).

4. A container according to any preceding claim, having liquid content less than or equal to 5% of the total weight of the content of the container, preferably a liquid content less than 1% of said weight.

5. A container according to any one of claims 1 to 3, having a liquid content that is strictly greater than 5% and less than or equal to 10%.

6. A container according to any preceding claim, wherein the volume content of dioxygen in the gas (22) is less than 5%.

7. A container according to any preceding claim, wherein the foodstuff (12) is in the form of steaks, pieces, filets, flakes, in minced or ground form, or indeed whole.

8. A method of manufacturing a container (10) according to any preceding claim, including a step (28) of filling foodstuff (12) into the container and a step (30) of eliminating the air present in the container.

9. A method according to the preceding claim, in which the step (30) of eliminating air comprises a step of introducing nitrogen in liquid form into the container.

10. Apparatus for manufacturing a container according to any one of claims 1 to 7, including means (48) for introducing liquid nitrogen into the container.

## Patentansprüche

1. Starrer Behälter (10) zur Konservierung von Lebensmitteln (12), wobei der Behälter einen Aufnahmeteil (14) und einen Deckel (16) umfasst und aus einem Material gefertigt ist, das aus Aluminium, Stahl, Glas und einem sauerstoffdichten Kunststoff gewählt ist, wobei die Lebensmittel (12) aus vorgekochtem Fisch in fester Form bestehen, gegebenenfalls mit einem Zusatzstoff, einem Konservierungsmittel, etwas Öl oder etwas Wasser, **dadurch gekennzeichnet, dass**
- der geschlossene Behälter (10), nach Sterilisation, im Wesentlichen keine Flüssigkeit aufweist, was bedeutet, dass er einen Flüssigkeitsgehalt unter oder gleich 10% der Gesamtmasse des Inhalts des Behälters umfasst, und
- der Behälter einzig die Lebensmittel (12) und ein Gas (22) enthält, wobei der Volumengehalt des Disauerstoffs in Bezug auf die Menge des anderen Gases unter 15% liegt, wobei das Gas Stickstoff (N_{2(g)}) ist.

2. Behälter nach dem vorstehenden Anspruch, wobei die enthaltenen Lebensmittel (12) gewählt sind aus der Gruppe bestehend aus Thunfisch, Lachs, Krabbe, Sardine, Garnele, Makrele und Weißfisch, die jeweils naturell oder aromatisiert sein können.

3. Behälter nach einem der vorstehenden Ansprüche, welcher glatte Seitenwände (20) aufweist.

4. Behälter nach einem der vorstehenden Ansprüche, der einen Flüssigkeitsgehalt unter oder gleich 5% der Gesamtmasse des Inhalts des Behälters, vorzugsweise einen Flüssigkeitsgehalt unter 1 % dieser Masse, umfasst.

5. Behälter nach einem der Ansprüche 1 bis 3, der einen Flüssigkeitsgehalt über 5% und unter oder gleich 10% umfasst.

6. Behälter nach einem der vorstehenden Ansprüche, wobei der Volumengehalt des Disauerstoffs in Bezug auf die Menge des anderen Gases (22) unter 5% liegt.

7. Behälter nach einem der vorstehenden Ansprüche, wobei die Lebensmittel (12) in Form von Scheiben, Stücken, Filets, Stückchen, gehackt oder auch am Stück vorliegen.

8. Verfahren zur Herstellung eines Behälters (10) nach einem der vorstehenden Ansprüche, das einen Schritt (28) zur Füllung der Lebensmittel (12) in den Behälter und einen Schritt (30) zur Entfernung der im Behälter vorhandenen Luft umfasst.

9. Verfahren nach dem vorstehenden Anspruch, wobei der Schritt (30) zur Entfernung der Luft einen Schritt zum Einlassen von Stickstoff in flüssiger Form in den Behälter umfasst.

10. Vorrichtung zur Herstellung eines Behälters nach einem der Ansprüche 1 bis 7, welche Mittel (48) zum Einlassen flüssigen Stickstoffs in den Behälter umfasst.
